Europäisches Patentamt

**European Patent Office**

Office européen des brevets

(19)

(11) Publication number: **0 046 775**
B1

(12)    EUROPEAN PATENT SPECIFICATION

(45) Date of publication of patent specification: **15.08.84**    (51) Int. Cl.³: **F 16 M 11/00**

(21) Application number: **81900489.6**

(22) Date of filing: **19.02.81**

(86) International application number:
**PCT/SE81/00046**

(87) International publication number:
**WO 81/02462 03.09.81 Gazette 81/21**

(54) TRESTLE.

(30) Priority: **20.02.80 SE 8001337**

(43) Date of publication of application:
**10.03.82 Bulletin 82/10**

(45) Publication of the grant of the patent:
**15.08.84 Bulletin 84/33**

(84) Designated Contracting States:
**AT CH DE FR GB LI NL SE**

(56) References cited:
**DE - A - 1 797 166**
**DE - C - 93 491**
**FR - A - 2 205 983**

(73) Proprietor: **LINDSKOG, Kjell Jan-Erik**
**Floravägen 27**
**S-931 00 Skellefteä (SE)**

(72) Inventor: **LINDSKOG, Kjell Jan-Erik**
**Floravägen 27**
**S-931 00 Skellefteä (SE)**

(74) Representative: **Petré, Urban et al,**
**AB STOCKHOLMS PATENTBYRA Box 3129**
**S-103 62 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a trestle, which comprises a support vertically adjustable in a stand, and legs attached to the stand.

Trestles knowingly are utilized for supporting objects of another kind, and especially for trestling cars which, for example, are to be repaired or the tires of which are to be exchanged, and also for trestling cars when they are to be stored for longer periods. The trestles, in order to be expedient, must be constructed so that they do not tend to turn over, but stand very firmly on their support. For this purpose, the known trestles are provided with at least three projecting legs, which are welded on the trestle stand. The leg end portions, which are positioned in the base plane and normally provided with footplates, are located at a relatively great distance from the vertical centre line of the stand. A foldable trestle as an accessory for a stick is disclosed in DE—C—93491. The present invention relates to a trestle with pivoted legs being lockable in a folded-out position. The claimed trestle is capable of resisting heavy loads on an adjustable support.

This object is achieved in that the trestle according to the invention has been given the characterizing features defined in the attached claims.

The invention is described in greater detail in the following, with reference to the accompanying drawings, in which

Fig. 1 is a view of the present trestle in operative position with projecting legs and

Fig. 2 is a view of the same trestle with folded-in legs.

The trestle according to the present invention comprises a stand 1 in the form of a sleeve, in which a support 3 is located which is provided with a carrying plate 2. Said support 3 is movable in longitudinal direction in the stand 1 and, thus, can be adjusted to different height positions. The support 3, furthermore, for being locked relative to the stand 1 in its adjusted height position is provided with a plurality of spaced holes, into which a cotter 4 inserted through holes in the stand 1 can be introduced. Said cotter preferably is connected to the stand 1 by a chain 5 or the like.

The present trestle further comprises a number of legs 6, which are attached to the stand 1. Each leg is provided at its end remote from the stand 1 with a footplate 7. The legs as shown have substantially U-shaped cross-section, the open side facing to the stand.

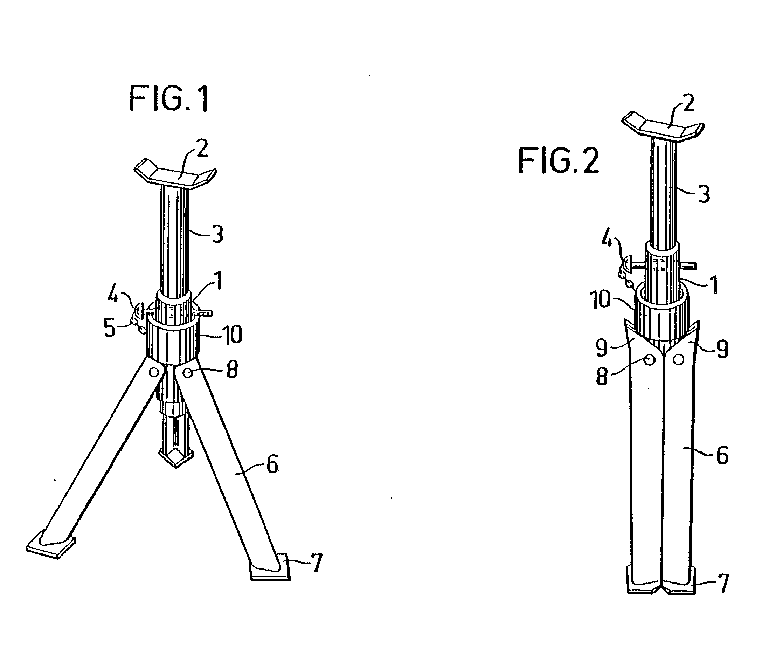

The legs 6 are attached pivotally to the stand by dowels 8, which are supported each by a bearing bushing (not shown) located on the outside of the stand. Each leg 6 is formed above its pivot point with a slightly outward bent supporting tongue 9, which is capable to limit the outward swing movement or outward folding of its leg to projecting position, in which the trestle in operative position is supported, which position is shown in Fig. 1 and determined by the supporting tongue of the respective leg.

In operative position of the trestle, thus, the supporting tongues 9 of the folded-out legs abut the stand 1. When the trestle is loaded, the supporting tongues 9, thus, are additionally pressed against the stand 1. Hereby a locking of the legs in folded-out position is obtained, but as this locking depends on the size of the load, an additional locking is provided which has the form of a locking ring 10, which is movable about the stand 1 and renders it impossible that the legs unintentionally are folded in when the trestle is in operative position. The locking ring 10, more precisely, in its locking position as shown in Fig. 1 encloses the locking tongues 9 of the legs which abut the stand and take up the load and locks said tongues against the stand. The locking ring, furthermore, in its locking position is prevented from moving relative to the stand 1 both by the cotter 4 and by the legs 6, as appears from Fig. 1.

For folding together the present trestle, the locking ring 10 subsequent to the removal of the cotter 4 is moved to the carrying plate 2 until the tongues 9 are entirely released. Thereafter the legs 6 can be folded in to a position substantially in parallel with the stand, in which position the legs then are locked in that the locking ring 10 again is moved against the supporting tongues 9 of the legs and the cotter 4 is inserted in suitable holes in the stand 1 and support 2, which in folded-together position of the trestle, which is the position suitable for transport and storage, preferably is inserted entirely in the stand 1.

The present invention is not restricted to the embodiment described above and shown in the drawings, but can be altered, modified and completed in many different ways within the scope of the invention defined in the attached claims.

## Claims

1. A trestle comprising a stand (1), a support (2, 3) adjustable in vertical direction in said stand, and at least three support legs (6) attached pivotally to said stand (1) for pivotal movement from a folded-out position, in which they support the trestle in an operative position, to a folded position, in which the legs (6) are substantially in parallel with the support and the stand, characterized in that each support leg (6) is substantially U-shaped in cross-section with its open side facing to the stand (1) and is formed with a supporting tongue (9) located above the pivot means (8) of the leg and which is bent slightly outward in relation to the longitudinal direction of the leg to define said folded-out or operative position, in which position the tongues (9) of the legs (6) abut the stand (1) and receive the load on the support (2, 3) and are located against unintentional movement by a locking ring (10) surrounding the tongues (9) in its locking position, said locking ring (10), located around the stand in a region thereof above the pivot means (8) of the legs, being movable upwards to release the supporting tongues (9) of the legs when the legs are to be folded to their inoperative position in parallel with the stand.

2. A trestle as defined in claim 1, characterized in that the locking ring (10) is located in its locking position against movement by a cotter (4) extending through the stand, said cotter (4) being also arranged to fix the support (2, 3) in its adjusted position in relation to the stand (1).

3. A trestle as defined in claim 1 or 2, characterized in that the legs are located in their inoperative position by said locking ring (10) surrounded by the supporting tongues (9) of the legs.

## Revendications

1. Tréteau compenant une colonne (1), un support (2, 3) verticalement réglable dans ladite colonne et au moins trois pieds d'appui (6) reliés de manière pivotante à ladite colonne (1) pour permettre un mouvement pivotant entre une position dépliée, dans laquelle ils supportent le tréteau dans une position de travail, et une position repliée, dans laquelle les pieds (6) sont sensiblement parallèles au support et à la colonne, caractérisé en ce que chaque pied d'appui (6) présente une section transversale formée seniblement en U, son côté ouvert faisant face à la colonne (1), et est façonné de manière à comporter une languette d'appui (9) disposée au-dessus des moyens de pivotement (8) du pied et courbée légèrement vers l'extérieur par rapport au sens longitudinal du pied afin de définir ladite position dépliée ou de travail, position dans laquelle les languettes (9) des pieds (6) butent contre la colonne (1) en recevant la charge appliquée au support (2, 3) et sont assurées contre tout mouvement intempestif au moyen d'un anneau de blocage (10) entourant les languettes (9) dans sa position de blocage, ledit anneau de blocage (10), disposé autour de la colonne dans une partie de celle-ci située au-dessus des moyens de pivotement (8) des pieds, étant déplaçable vers le haut pour libérer les languettes d'appui (9) des pieds lorsque ceux-ci doivent être repliés en vue d'occuper leur position de repos parallèlement à la colonne.

2. Tréteau selon la revendication 1, caractérisé en ce que l'anneau de blocage (10) est assuré dans sa position de blocage contre tout mouvement au moyen d'une goupille (4) s'étendant à travers la colonne, ladite goupille (4) étant également disposée pour fixer le support (2, 3), dans sa position réglée par rapport à la colonne (1).

3. Tréteau selon l'une des revendications 1 et 2, caractérisé en ce que les pieds sont assurés dans leur position de repos au moyen dudit anneau de blocage (10) entouré par les languettes d'appui (9) des pieds.

## Patentansprüche

1. Stützblock mit einem Stativ (1), einer Stütze (2, 3), die im Stative höhenverstellbar ist, und mindestens drei Stützbeinen (6), die am Stative (1) schwenkbar befestigt sind, um von einer ausgespreizten Lage, worin sie den Stützbock in einer betriebsfähigen Lage unterstützen, zu einer zusammengelegten Lage geschwenkt zu werden, worin die Beine (6) zu der Stütze und dem Stativ wesentlich parallel sind, dadurch gekennzeichnet, dass jedes Stützbein (6) einen Querschnitt von wesentlich U-Form und seine offene Seite nach dem Stativ (1) hin hat und mit einer Stützzunge (9) ausgebildet ist, die oberhalb des Drehorgans (8) des Beins placiert ist und in Beziehung zur Längsrichtung des Beins ein wenig nach aussen gebogen ist, um die ausgespreizte oder betriebsfähige Lage zu definieren, worin die Zungen (9) der Beine (6) dem Stative (1) anliegen, die Belastung auf die Stütze (2, 3) aufnehmen und gegen unabsichtliche Bewegung mit einem Sicherungsring (10) gesichert sind, welcher in seiner geschlossenen Lage die Zungen (9) umgibt, wobei der Sicherungsring (10), der rings um das Stativ in einem Bereiche oberhalb des Drehorgans (8) der Beine placiert ist, aufwärts bewegbar ist, um die Stützzungen (9) der Beine freizugeben, wenn die Beine in ihre unwirksame Lage parallel zum Stative zusammengelegt werden sollen.

2. Stützbock nach Anspruch 1, dadurch gekennzeichnet, dass der Sicherungsring (10) in seiner Sicherungslage gegen Bewegung mittels eines Splints (4) gesichert ist, der durch das Stativ geht, wobei der Splint (4) auch vorgesehen ist, das Stativ (2, 3) in seiner justierten Lage in Beziehung zum Stative (1) zu fixieren.

3. Stützbock nach Anspruch 1 oder 2, dadurch gekennzeichnet, dass die Beine in ihrer unwirksamen Lage mittels des Sicherungsrings (10) gesichert sind, der von den Stützzungen (9) der Beine umgeben ist.

FIG.1

FIG.2